# EUROPÄISCHE PATENTANMELDUNG

(11) **EP 2 146 285 A1**
(43) Veröffentlichungstag der Anmeldung: **20.01.2010**
(21) Anmeldenummer: 07870638.9
(22) Anmeldetag: 24.12.2007
(51) Int. Cl.: G06F 13/00

(54) **VERFAHREN ZUM BETRIEB EINES SYSTEMS MIT ZUGANGSKONTROLLE ZUR VERWENDUNG IN COMPUTERNETZEN UND SYSTEM ZUM AUSFÜHREN DES VERFAHRENS**

(30) Priorität: 13.03.2007 RU 2007108939
(71) Anmelder: Sakharov, Oleg Veniaminovich, St.Petersburg 190068 (RU); Kirikov, Sergey, St. Petersburg 197227 (RU); Mikhailov, Nikolay, St. Petersburg 195265 (RU)
(72) Erfinder: GLAGOLEV, Sergey, St. Petersburg, 195298 (RU); KIRIKOV, Sergey, St. Petersburg, 197227 (RU); NOVIKOV, Sergey, St. Petersburg, 192288 (RU); MIKHAILOV, Nikolay, St. Petersburg, 195265 (RU)
(74) Vertreter: Jeck, Anton
(86) Internationale Anmeldenummer: PCT/RU2007/000723
(87) Internationale Veröffentlichungsnummer: WO 2008/111870

(57) **Zusammenfassung**

Die Erfindung betrifft ein Verfahren zur Zugangsberechtigung in Computernetzwerken und ein System zur Durchführung des Verfahrens. Das Verfahren besteht aus einem Server der Adaption der Ströme der Inhalte des Anbieters (Content Stream Adapting Server - CSAS), einem Computernetzwerk (CN), Netzterminals (NT) einem Server für die Zugangskontrolle der Benutzer (Access Control Server - ACS) für das Computernetzwerk und einen Server-Validator (7). Durch die Ausbildung und die Wechselwirkung dieser Baugruppen wird eine Kontrolle der Rechte des Content-Anbieters sichergestellt.

## Beschreibung

Die Erfindung betrifft ein Verfahren zur Zugangsberechtigung in Computernetzwerken und System zur Durchführung des Verfahrens.

Die Erfindung kann in einem Funk- und Empfangssystem als Zugangsberechtigungssystem verwendet werden.

Heutzutage ist die Verbreitung von Multimedia-Inhalten (Audio- und Videodateien) im Digitalformat sehr populär geworden. Für die Verbreitung der Inhalte wird eine Übertragung der Inhalte im Dateiformat, sowie eine Übertragung durch die Ausführung der DVB-Spezifikation (Digital Video Broadcasting) verwendet. Dabei wird der Teil der Bevölkerung, der durch die Computernetzwerke umfasst wird, immer größer. Das erweckt das Interesse an der Erfindung als ein aussichtsreiches Mileau für die Verbreitung von Multimedia-Inhalten. Für den allgemeinen Einsatz der Funktechnologien für Multimedia-Inhalte in Netzwerken gibt es heute eine Reihe von Rahmenbedingungen. Die Wichtigste davon ist ein hoher Preis der Ausrüstung der Hauptstationen, die das kryptographisch geschützte Format der Multimedia-Inhalte in ein neues kryptographisch geschütztes Format umsetzt, welches für den Einsatz in einem Computernetzwerk geeignet ist. Von anderer Seite können die Anbieter der Multimedia-Inhalte nicht immer den Netzwerkanbietern vertrauen und möchten eine von den Netzwerkanbietern unabhängige Kontrolle der Kunden haben, welche den Missbrauch durch den potentiellen Konsumenten der Inhalte ausschließt.

Im Patent US Nr. 6307939 ist ein Verfahren zur Reduzierung der Kosten bei der Weiterleitung der geschützten Inhalte (Adaptation) für die Verbreitung in einem anderen Netz mit einem Zugangsberechtigungssystem (Control Access System) veröffentlicht. Das Verfahren schlägt vor, den Typ des kryptographischen Schutzes (Scrambling) der Inhalte nicht zu verändern, sondern nur den Strom der individuellen ECM- und EMM-Nachrichten (gemäß der Vereinbarungen in der SIMULCRYPT-Technik und Standard-Spezifikation ETSI TS 101 197 V1.2.1) zu ändern, mit Hilfe deren das Kontrollwort (control word - CW) für einen Descrambler auf das Kundenterminal weitergeleitet wird. Jedoch die Realisierung des genannten Verfahrens in einem Computernetz weist folgende Mängel auf. Für die CW-Entschlüsselung wird vorgeschlagen, die für unidirektionale Übertragungsnetze für digitale Multimedia-Inhalte (z.B. Satelliten-DVB-S- und Kabel-DVB-C-Broadcasting) typische Verfahren zu verwenden. Das ist mit einer Komplikation der Teilnehmerterminale und mit einer erhöhten Empfindlichkeit gegen den Missbrauch durch die Fälschung der Conditional Access Module und der Karten für den Conditional Access verbunden.

Das Verfahren zur Einschränkung des Zugangs zu den Inhalten durch die Steuerungselemente des Netzwerks wurde im US-Patent Nr. 7188245 veröffentlicht, in welchem die Varianten der Zugangseinschränkung mit Hilfe von Protokollen und der Hardware für die Steuerung (Konfigurierung) des Netzwerks dargestellt sind. Solche Verfahren der Zugangsberechtigung sind von der Sichtweise der Netzwerkoperatoren attraktiv, weil die notwendigen Komponenten bereits in der Struktur der meisten Netzwerke enthalten sind. Dieses Verfahren kann aber die Distributors der Multimedia-Inhalte nicht zufriedenstellen, weil von einer Seite die Möglichkeit besteht, die wirkliche Anzahl der Abonnenten in Berichten für den Content-Anbieter zu verbergen, und weil von anderer Seite die Gefahr besteht, dass die unehrlichen Benutzer des Netzwerks ohne Kontrolle die Inhalte kopieren und weiterverbreiten können.

Geschichtlich ist die Möglichkeit, jedes Benutzerterminal direkt und unabhängig vom Netzwerkoperator zu kontrollieren, das Hauptkriterium geworden, welches die Content-Anbieter für die Ermittlung der Möglichkeit der Distribution in diesem oder anderem Netzwerk verwenden. Die Verfahren, die eine solche Kontrolle (für legale Benutzer) ermöglichen, sind in den USA-Patenten Nr. 6532539, Nr. 6898285, Nr. 7120253 und Nr. 7149309 beschrieben. Aber alle Verfahren, die in den obigen Patentanmeldungen beschrieben sind, können die Unzugänglichkeit des Contents für unlautere Benutzer nicht gewährleisten, wenn diese eine bekannte und unter Piraten der DVB-Inhalte verbreitete Technologie, bekannt als Card-Sharing, nutzen, die für unidirektionale Übertragungsnetze typisch ist. Diese unlautere Technologie besteht darin, dass die Benutzer Software mit Descrambler und Anfragemodul für einen fremden Card-Server installieren, welcher ein legales Zugangsberechtigungsmodul (CAM) enthalten kann. Dieser Server wird als ein legales Benutzerterminal vom Anbieter betrachtet, aber er kann dabei die entschlüsselte Kontrollwörter (CW) auf Anfrage anderer Benutzer liefern. Außerdem kann ein solches Verfahren zur Manipulation des Zugangsberechtigungssystems (CAS) in einem Netzwerk bequemer sein und sehr leichter verbreitet werden. So ist es verständlich, dass die Anbieter der Multimedia-Inhalte aufmerksam die bekannten Zugangsberechtigungssysteme CAS für die Redistribution der qualitativen Multimedia-Inhalte durch die Netzwerke betrachten. Deswegen wird ein neues System zur Gewährleistung des Zugangs zu den im Netzwerk weiterleitbaren Inhalten benötigt. Gleichzeitig soll die technische Lösung so einfach wie möglich sein, um wirtschaftlich attraktiv für die Netzwerkoperatoren zu sein. Es ist offensichtlich, dass nur ein komplexes Herangehen an die gestellte Aufgabe eine Zugangsberechtigung schafft, die den widerspruchsvollen Anforderungen der Anbieter der Multimedia-Inhalte einerseits und der Operatoren der bestehenden Netzwerke andererseits genügt. Dieses Herangehen vereinigt die Anforderungen zur Sicherheitsqualität der verbreiteten Zugangsberechtigungssysteme (Conditional Access System) für unidirektionale Kommunikationskanäle (gebaut auf der Basis der kryptographischen Protokolle wie Viaccess, Irdeto, NDS) und ermöglicht gleichzeitig die Einrichtung eines Zugangsberechtigungssystems (Conditional Access System) auf der Basis der Steuerung und Konfiguration des Netzwerks mit der Verwendung der kryptographischen Autorisierungsprotokolle und der Protokolle von sicheren Verbindungen, wie z. B. Secure Sockets Layer (SSL) oder IP Security (IPSec).

Das der Erfindung nächstliegende Verfahren wurde im Patent EP 1525732 offenbart. In diesem Patent wird ein Verfahren für eine Wechselwirkung zwischen einem Abonnent, einem Server für eine Abonnentauthorisierung und einem Server mit Inhalten vom Anbieter beschrieben. Diese Lösung ermöglicht, die geschützten Lösungen für einen Zugang zu den Inhalten in Netzwerken anzubieten. Aber dieses Verfahren sieht eine unmittelbare Verwendung der Sessionsschlüssel für die Abonnenten während der Vorbereitung (Verschlüsselung) der Inhalte für Broadcasting vor. Das ist umständlich für die meisten Anbieter der Inhalte, weil es eine wesentliche Modifikation der Software und der Hardware erfordert. Dieses Verfahren sieht eine Verwendung der Mittel für eine direkte Weiterleitung der geschützten Inhalte mit Strömen der ECM (Entitlement Control Messages) und EMM (Entitlement Management Messages), sowie für die Adaptation der genannten Inhalte im Computernetzwerk nicht vor, wobei die Benutzer in diesem Fall durch den Anbieter der Inhalte kontrolliert werden.

Es ist Aufgabe der Erfindung, die oben genannten Mängel des Standes der Technik zu beheben und ein Verfahren zur Zugangsberechtigung in Computernetzwerken zu schaffen, das eine Wechselwirkung zwischen dem Server der Adaption der Ströme der Inhalte des Anbieters dem Computernetzwerk von Netzwerkterminals und einem Server für die Zugangskontrolle der Benutzer aufweist, das eine Kontrolle der Rechte des Content-Anbieters sicherstellt.

Die gestellte Aufgabe wird durch die Merkmale des Anspruchs 1 und 44 gelöst. Vorteilhafte Ausgestaltungen sind den Unteransprüchen zu entnehmen.

### Die Erfindung wird anhand der Zeichnungen näher erläutert. Es zeigen:

- Fig. 1: schematisch eine Variante der Realisierung des Systems gemäß dieser Erfindung,
- Fig. 2: ein Diagramm des Nachrichtenaustausches während der Prozeduren der Vorbereitung des Zugangs zu den Inhalten und Übertragung des Content-Stroms und
- Fig. 3: ein Diagramm des Nachrichtenaustausches während einer vereinfachten Prozedur des Zugangs.

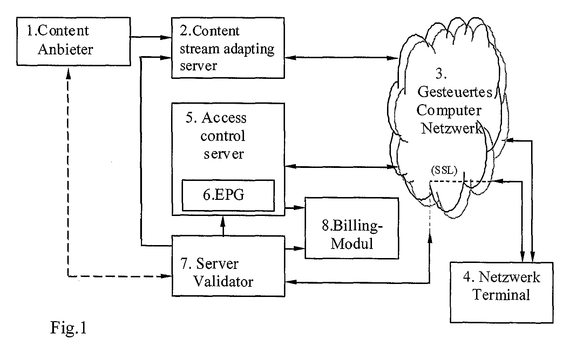

Eine hohe wirtschaftliche Effizienz der Realisierung des vorgeschlagenen Verfahrens stellt der Einsatz eine Content Stream Adapting Servers CSAS (2) sicher, wobei der Prozess der Adaptation der Ströme des Content-Anbieters (1) für die Übertragung in ein Computernetz CN (3) realisiert ist (siehe. Fig. 1). Der Prozess der Adaptation des geschützten (gescrambelten) Contentstroms des Anbieters besteht in der Re-Verkapselung des Contentstroms ins Format, das für die Übertragung mittels einer IP-Adressierung geeignet ist. Die Pakete der verschlüsselten Daten des Content-Stroms des Anbieters werden dabei nicht modifiziert, die für Descrambling / Entschlüsselung notwendigen Kontrollwörter (CW), die auf Content Stream Adapting Servers (CSAS) vom Server Validator (7) übertragen werden, werden mit Hilfe von Sessionsschlüssel (Session Keys - SK) verschlüsselt und in den Strom eines ECM-Paketes der ECM-Nachrichten gesetzt. Der Server der Adaptierung der Ströme weist den Contentströmen einzigartige Adressen des Bezugs-Internet-Protokolls (IP) zu.

Die Sicherheit des Zugangs zum Content in Computernetzwerken wird durch den Einsatz des Verfahrens, durch die Verwendung von Prozeduren der Vorbereitung des Zugangs zum Content und der Übertragung des Contentstroms ermöglicht. In den genannten Prozeduren (siehe Fig. 1) nehmen Access Control Server (ACS-5) teil, der mit einem Modul, einem elektronischen Programmführer (Electronic Program Guide - EPG-6), einem Server Validator (7) und einem Netzwerkterminal (NT-4) versehen ist.

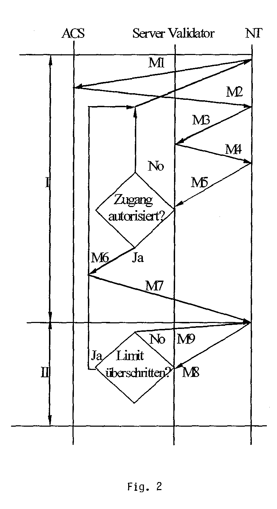

Die Prozedur der Vorbereitung des Zugangs zum Content besteht im Folgenden: Nach dem Austausch der Pakete (siehe Fig. 2) M1 und M2 mit Hilfe des elektronischen Programmführers (EPG) erstellt das Netzwerkterminal (NT) eine Anfrage an M3 an die IP-Adresse des Server Validators 7, um den Zugang zum ausgewählten Contentstrom zu initiieren. Die Anfrage enthält einen Bezeichner (ID) vom Netzwerkterminal (NT) und eine vereinbarte Nummer eines ausgewählten Contentstroms. Als Antwort auf Anfrage erstellt der Server Validator 7 eine Anfrage über die Bestätigung der Rechte für das Netzwerkterminal (NT) des Benutzers für den Zugang zum Content M4. Als Antwort auf die Anfrage schickt das Netzwerkterminal (NT) eine Nachricht mit einem Personalschlüsselsatz M5. Wenn die Autorisierung des Benutzers erfolgreich war, erzeugt der Server Validator 7 eine Nachricht für den Server für die Zugangskontrolle (ACS) M6 mit der Kennung (NT ID) und eine vereinbarte Nummer des Contentstroms. Die Nachricht erlaubt den Zugang dieses Netzwerkterminals zum ausgewählten Content des Benutzers. Dann sendet der Server für die Zugangskontrolle (ACS) eine Nachricht für für das Netzwerkterminal NT-M7, welche die IP-Adresse des ausgewählten Contentstroms enthält. Gleichzeitig wird ein geschützter Kommunikationskanal zwischen Netzwerkterminal und dem Server Validator 7 gebildet. Der Kanal wird in der Prozedur der Übertragung des Contentstroms verwendet.

Die Prozedur der Übertragung des Netzwerkterminal-Content-Stroms (Fig. 2) besteht im Folgenden:

Das Terminal empfängt den Contentstrom an seiner IP-Adresse, demultiplexiert die Nachricht ECM aus dem Strom, entschlüsselt das Kontrollwort CW durch den Sessionsschlüssel SK, descrambliert die Contentdaten mittels des Kontrollworts CW und gibt sie mit einem Player wieder. Dabei empfängt das Netzwerkterminal NT die aktuellen Sessionsschlüssel SK nach den Anfragen M8 vom Server Validator 7 in Nachrichten M9 über einen geschützten Kommunikationskanal. In diesem Fall besteht die Kontrolle der Rechte des Contentanbieters darin, dass die Wiedergabe des Datenstroms sowie durch den Operator des Computernetzwerks durch die Verweigerung des Zugangs für dieses Terminal zur IP-Adresse des Contents im Computernetz CN für den Benutzer-Anschluss, als auch durch den Server Validator 7 gestoppt werden kann, wenn dieser absagt, den durch das Terminal angefragten Sessionsschlüssel SK zu verteilen.

Die Verbesserung der Contentsicherheit wird in diesem Verfahren dadurch erreicht, dass der Server für die Ströme CSAS die originalen ECM- und EMM-Nachrichten des Contentanbieters im Ausgangsstrom löscht. Das verhindert eine direkte Verwendung der Technologien der Contentpiraten für unidirektionale Kommunikationskanäle (DVB-S N DVB-C).

Das vorgeschlagene Verfahren der Adaptation auf dem Strom-Adaptation-Server ist bei der Verwendung weit verbreiteten Technologie der Netzwerke, Verkapselung des Contentstroms des Anbieters in Form des Transportstroms (TS) in Pakete des Benutzer Datagramm Protokoll (User Datagramm Protocol - UDP) für multicast oder unicast IP-Adressen passend.

Zugleich ist es möglich, den im Internet weit verbreiteten Broadcasting-Mechanismus mit Hilfe eines Übertragungssteuerungsprotokoll (TCP) zu realisieren, zum Beispiel durch Hypertext-Übertragungsprotokoll (http), Realtime-Transfer-Protokoll (RTP), Realtime-Transfer-Protokoll für Mediaströme (RTSP) und Dateiübertragungsprotokoll (FTP). Dabei ist die Verkapselung des Contentstroms des Anbieters in folgende Formate möglich: MPEG1, MPEG2, MPEG4, WM, RA, RV, AVI, OGG, MP3, PCM, WAV, AIFF, ADPCM.

Die Contentströme des Anbieters können unterschiedlich realisiert werden. Die meist verbreitete Variante ist die Übertragung durch DVB-Spezifikationen (DVB-S, DVB- T, DVB-C, DVB-H). Dabei ist es möglich, eine funktionale und wirtschaftlich effiziente CSAS-Realisierung bei der Integration der Module für den Empfang der modulierten DVB-Content-Ströme oder für den Empfang durch eine asynchrone serielle Schnittstelle (ASI) oder eine synchrone serielle Schnittstelle (SPI) sicherzustellen.

In bestimmten Fällen kann die CSAS-Realisierung mit integrierten Capture Cards für analoge Mediadata geeignet sein. Dabei stellt der Contentstrom analoge Video- und Audiosignale dar.

Der Contentstrom des Anbieters kann bereits gebildete Pakete IPTV-Fernsehpakete in UDP-Paketen für multicast und unicast IP-Adressen darstellen. Das ist die einfachste CSAS Realisierung.

Das Content wird durch die Anbieter in Formaten TS, MPEG1, MPEG2, MPEG4, WM, RA, RV, AVI, OGG, MP3, PCM, WAV, AIFF, ADPCM über ein Computernetz und auf Datenträgern (DVD, CD, Flash-Karte, Festplatte) übertragen, was auch eine effiziente CSAS-Realisierung erlaubt. Dabei kann der Anbieter eigene Rechner schützen, wobei er keinen offenen, sondern einen gescrambelten Content übermittelt. Maximale Sicherheit wird in dem Fall erreicht, wenn die Kontrollwörter CW separat von den Contentdateien übertragen werden.

Das meist verbreitete Scramblingverfahren für Content des Anbieters ist die Realisierung eines allgemeinen Scramblingalgorhytmus (CSA). Aber für den Adaptationsprozess sind auch andere Verfahren der kryptographischen Sicherheit des Contents des Anbieters geeignet, z. B. mit Hilfe der Verschlüsselungsalgorhytmen RC4, AES- 128, GOST 28147-89, DES, HC-128. In Einzelfällen kann dieser Schutz - Scrambling / Verschlüsselung der Daten auf Content Stream Adapting Server (CSAS) ausgeführt werden.

Das vorgeschlagene Verfahren erlaubt einfache und intuitiv verständliche Schnittstellen für die Wechselwirkung der Benutzer mit dem System durch ein Netzwerkterminal NT zu erstellen. Für die Bestätigung der NT-Rechte kann der Server Validator 7 eine Hypertext-Seite (html) erzeugen, wo eine Auswahl der Varianten für die Bestätigung der Zugangsbedingungen angeboten wird: z. B. eine Liste aus der Nummern bereits aktivierten Prepaid-Karten für unterschiedliche Senderpakete. Wenn der Benutzer die Option früher ausgewählt hat, kann eine Standard-Variante des Abonnements ausgewählt werden. Die Aktivierung des Abonnements von einer solchen Seite kann durch die Eingabe eines PIN-Kodes erfolgen.

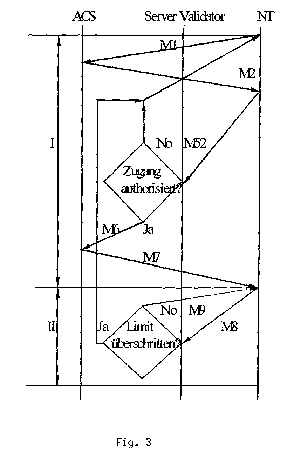

Die Tiefe der interaktiven Wechselwirkung des Benutzers mit einem Zugangsberechtigungssystem (CAS) kann im vorgeschlagenen Verfahren bei der vereinfachten Prozedur für Zugangsberechtigung reduziert werden (Fig. 3). Die Modifikation des Verfahrens unterscheidet sich in diesem Fall dadurch, dass bei der Auswahl des Contents bei einer interaktiven Wechselwirkung mit einem elektronischem Programmführer (EPG) wird vorgeschlagen, den PIN-Kode oder Schlüsselsatz einzugeben, welche im Rahmen einer Anfrage auf den Server Validator (7) gelangt.

Beim vorgeschlagenen CAS-Verfahren für ein Computernetzwerk kann eine Media-Access-Control-Adresse (MAC), eine vorgeschriebene IP-Adresse für ein Netzwerkterminal (NT), eine Serien-Nummer des Terminals, ein Schlüsselsatz, ein PIN-Kode oder deren Kombination als NT-Bezeichner (IT) verwendet werden, während die Zugangsberechtigungen als Vergleichskriterium geprüft werden. Diese Daten werden dann zum Server für die Zugangskontrolle (ACS) weitergegeben, wenn die NT-Autorisierung erfolgreich war. Außerdem kann die Sicherheit mit Hilfe der CN-Mittel verbessert werden. In diesem Fall erstellt der Server Validator (7) die Nachrichten über die Einschränkung des Zugangs zum Content für nicht autorisierte Terminals und gibt sie an den Server für die Zugangskontrolle (ACS) weiter. Dieser konfiguriert die Begrenzung des Zugangs zur IP-Adresse des Contents im Computernetz (CN) am Benutzeranschluss.

Für die Sicherheit des interaktiven Dialogs zwischen dem Server Validator (7) und dem Netzwerkterminal (NT) ist es empfehlenswert, die Technologien und die Protokolle für die Übertragung des Passworts (PIN-Kode) mit den Algorhytmen MD5, SHAI, GOST R 34.11-94 oder mit einer sicheren Verbindung mit den Protokollen SSL/TLS, IPSec, Point-to-Point Protocol (PPTP) zu verwenden. Es ist zweckmäßig, die interaktive Wechselwirkung des Benutzers mit dem Server für die Zugangskontrolle ACS in Form der HTML-Seiten auszuführen, die mit den HTTP/HTTPS-Protokollen übertragen werden.

Die Sessionsschlüssel (SK), die im Server-Validator (7) erstellt wurden, kommen im Server für die Zugangskontrolle (ACS) an, wo die Kontrollwörter (CW) mittels der Verschlüsselungsalgorhytmen AES- 128, GOST 28147-89, DES, HC-128 verschlüsselt werden, bevor sie als ECM-Nachrichten gesetzt werden. Um die notwendige Sicherheitsstufe zu erreichen, müssen die Sessionsschlüssel (SK) dynamisch in bestimmten Zeitabständen aktualisiert werden. Dabei können flexible Sicherheitspolitiken erstellt werden, die leicht zu verwalten sind. Wenn Sessionsschlüssel (SK) als Schlüsselsätze dargestellt werden, die gleichzeitig aber mit einer unterschiedlichen Gültigkeitsdauer aktiv sind (z. B. Schüsselsatz mit einer Gültigkeitsdauer von 1, 3, 5, 15 Minuten oder 1, 3, 5, 12 Stunden). Technisch können die Sessionsschlüssel (SK) erstellt oder aus dem vorläufigen Datensatz im Server Validator (7) ausgewählt werden, sowie vom Contentanbieter geliefert werden.

Im Anbieter-Computernetz (CN) wird vorgeschlagen, das Internet-Group-Management-Protokoll (IGMP) zu verwenden, um den Zugang zum Contentstrom am Benutzeranschluß bei multicast IP-Adressierung zu beschränken. Zusätzlich wird vorgeschlagen, das RADIUS-Protokoll, das in Spezifikationen RFC 2058 und RFC 2059 beschrieben ist, einfaches Netzverwaltungsprotokoll (SNMP), Address Resolution Protocol (ARP) oder deren Kombination zu verwenden, um den Zugang des Benutzers zum Anschluß des Computernetzwerks zu ermöglichen.

Die Kontrollwörter (CW) des Anbieters, die für die Funktion des vorgeschlagenen Verfahrens notwendig sind, können durch die Entschlüsselung der demultiplexierten ECM-Nachrichten im offiziellen CA-Modul (CAM) des Content-Anbieters erstellt werden oder direkt vom Server des Content-Anbieters über einen sicheren Kommunikationskanal geliefert werden. Das Modul für die CW-Extraktion kann zum Server Validator (7) und zum Server für die Ströme der Inhalte des Anbieters (CSAS) gehören, was durch bestimmte Bedingungen des Systemaufbaus bedingt ist. In Einzelfällen kann es zugelassen werden, offene Kontrollwörter (CW) auf das Netzwerkterminal (NT) aber über einen sicheren Kommunikationskanal zu übermitteln.

Das Verfahren erlaubt es, in einzelne Datenpakete des Contentstroms des Anbieters an dem Server für die Ströme der Inhalte des Anbieters (CSAS) spezielle unauffällige Verzerrungen (Wasserzeichen) einzufügen, um den autorisierten Benutzer zu lokalisieren, welcher den Content des Anbieters illegal vervielfältigt.

Um die transparenten Zahlungsverhältnisse zwischen den CN-Operatoren und dem Anbieter der Contentströme sicherzustellen, ist im Verfahren eine Integration mit dem Billingsystem vorgesehen, wo der Server für die Zugangskontrolle (ACS) die Nachrichten über Anfang / Ende der Abrechnung gemäß Tarif für den Zugang des Netzwerkterminals zum Contentstrom des Anbieters erstellt. Im vorgeschlagenen Verfahren kann der Server Validator (7) die Nachrichten für das Billingsystem des CN-Operators erstellen, was einen Missbrauch ausschließt.

Für die Autorisierung und Bestimmung des Limits für die Benutzung des Contents wird vorgeschlagen, eine im Server Validator (7) eine integrierte Datenbank zu verwenden. Die Datenbank soll mindestens ein folgendes Feld haben: PIN-Kode, Netzwerk-Hardware-Adresse des Terminals, IP-Adresse des Terminals, einen Zähler für die restliche Zeit des Limits, eine Gültigkeitsdauer für den PIN-Kode dieses Accounts. Um die Rechte des Benutzers zu prüfen, können gleichzeitig mehrere Datensätze dieser Datenbank verwendet werden, in welchen er autorisiert sein kann.

Das Verfahren setzt voraus, dass nur der Content-Anbieter den Zugang zum BillingModul hat (es ist wünschenswert, dass der genannte Anbieter der Inhaber des Server Validators (7) ist). Das Billingmodul des Netzwerk-Operators liefert dabei Berichte für den Content-Anbieter über den Server Validator (7).

Für die Realisierung des obengenannten Zugangsberechtigungsverfahrens (Conditional Access Method) wurde das Zugangsberechtigungssystem (Conditional Access System - CAS) für den Einsatz in Computernetzwerken vorgeschlagen (Fig. 1). Das System hat mindestens einen Server für die Ströme der Inhalte (CSAS) des Anbieters (2), welcher einzigartige Adressen eines Basis-Internet-Protokolls (IP) den Content-Strömen im Computernetzwerk (CN-3) zuweist. Der Zugang zu den IP-Adressen ist durch eine Menge der Netzwerkterminals (NT) möglich, welche einen Content-Player, einen Descrambler, ein Modul für die Anfrage des Zugangs zum Content haben. Das Zugangsanfragemodul ist durch ein Computernetz mit einem Server für die Zugangskontrolle des Benutzers (ACS-5) und einen Server Validator (7) verbunden, welcher dem Netzwerkterminal (NT) die Sessionsschlüssel (SK) verteilt, die die Kontrollwörter (CW) für die Contentdaten des Anbieters (2) schützen. Der Server für die Ströme der Inhalte des Anbieters (CSAS) stellt den Adaptationsprozess des geschützten (gescrambelten) Stroms des Contents des Anbieters (2) für die Übertragung im Computernetz (CN) sicher. Während der Übertragung wird der Strom der Contentbits ins Format re-verschlüsselt, das für die Übertragung mittels der IP-Adressierung geeignet ist; dabei werden die Pakete der scramblierten / verschlüsselten Daten der Content-Ströme des Anbieters (2) nicht modifiziert und die Kontrollwörter (CW), die für die Descrambling / Entschlüsselung der Content-Daten notwendig sind, werden mittels des Sessionsschlüssels (SK) verschlüsselt, die auf den Server für die Ströme der Inhalte (CSAS) vom Server Validator (7) übertragen werden, und in den Strom der Nachrichten für die Steuerung der Rechte (ECS-Nachrichten) eingeschlossen sind. Die Prozedur der Vorbereitung des Zugangs zum Content besteht im Folgenden:
Durch die Wechselwirkung mit dem elektronischen Programmführer (EPG), welcher funktional mit dem Server für die Zugangskontrolle (ACS) verbunden ist, erstellt im Netzwerkterminal (NT) eine Anfrage zur Initialisierung des Zugangs zum ausgewählten Strom an IP-Adresse des Servers Validators (7). Die Anfrage enthält einen Bezeichner (Kennungs-ID-NT) und eine vereinbarte Nummer des ausgewählten Contentstroms. Als Antwort auf die Anfrage erstellt der Server Validator (7) für das Netzwerkterminal (NT) des Benutzers eine Anfrage für die Bestätigung der Rechte für den Zugang zum Content. Als Antwort sendet das Netzwerkterminal (NT) eine Nachricht mit einem personalen Schlüsselsatz. Bei einer erfolgreichen NT-Autorisierung erstellt der Server Validator (7) eine Nachricht für den Server für die Zugangskontrolle (ACS), welche die Kennung (NT-ID) und eine vereinbarte Nummer des Contentstroms enthält, welche den Zugang für dieses Netzwerkterminal (NT) zum ausgewählten Content des Benutzers erlaubt. Der Server für die Zugangskontrolle (ACS) sendet eine Nachricht an das Netzwerkterminal (NT), welche die IP-Adresse des ausgewählten Contentstroms enthält. Gleichzeitig wird ein sicherer Kommunikationskanal zwischen dem Netzwerkterminal (NT) und dem Server Validator (7) gebildet. Über diesen Kanal sendet der Server Validator (7) die Nachrichten mit einem aktuellen Sessionsschlüssel (SK) als Antworten auf die Anfragen. Die Prozeduren der Wiedergabe des Contentstroms bestehen darin, dass Netzwerkterminal (NT) die ECMs aus den Daten des ausgewählten Stroms des Anbieters de-multiplexiert, welche durch die IP-Adresse vom Server für die Ströme der Inhalte (CSAS) empfangen wurden, entschlüsselt das Kontrollwort (CW) mittels der Sessionsschlüssel (SK), descrambliert mit Hilfe des Kontrollworts die Contentdaten und gibt sie mit einem Player wieder. Dabei kann die Wiedergabe entweder durch einen Operator des Computernetzes durch die Einschränkung des Zugangs für dieses Terminal zur IP-Adresse des Contents im Computernetz (CN) am Benutzeranschluss, oder durch den Server Validator (7) bei der Absage, den Sessionsschlüssel (SK) auf Anfrage des Terminals zu liefern, gesperrt werden.
Für ein vorgeschlagenes Zugangsberechtigungssystem (CAS) können als Netzwerk-terminals (NT) sowie als Beistellgeräte - Set-Top-Boxen, als auch Personal Computer mit einer entsprechend installierten Software verwendet werden.
Für eine interaktive Wechselwirkung mit einem Server für die Zugangskonstrolle (ACS) im System wird vorgeschlagen, das Modul des elektronischen Programmführers (EPG-6) zu verwenden, welches in den Server für die Zugangskontrolle (ACS) integriert werden kann oder als ein oder mehrere Server ausgeführt werden kann.

Für die Extraktion der Kontrollwörter (CW) kann ein oder mehrere offizielle Zugangsberechtigungsmodule (Conditional Access Module = CAM)) des Contentanbieters verwendet werden. Diese Module können sowohl im Server für die Ströme der Inhalte (CSAS), als auch auf dem Server Validator (7) gesetzt werden.

Das vorgeschlagene System ist **dadurch gekennzeichnet, dass** es gleichzeitig von mehreren unterschiedlichen Contentanbieter verwendet werden kann, was bei einer Installation mehrerer Server Validatoren (7) unterschiedlicher Contentanbieter zulässig ist.

Um die Anforderung zum Zugangsberechtigungssystem (CAS)( über die Sicherstellung eines transparenten Abrechnungssystems für den Contentanbieter zu erfüllen, hat das System ein Billingmodul, welches sowohl mit dem Server Validator (7), als auch mit dem Server für die Zugangskontrolle (ACS) vereinigt werden kann.

Für die Daten, gemäß deren die NT-Autorisierung erfolgt, hat der Server Validator (7) eine Datenbank, die mindestens ein folgendes Feld hat: einen PIN-Kode, eine Netzwerk-Hardware-Adresse des Terminals, einen Zähler für die restliche Zeit des Limits, eine Gültigkeitsdauer für die PIN-Kode dieses Datensatzes. Dabei wird der Datensatz der PIN-Kode als ein Pflichtfeld in der Datenbank verwendet. Eine Menge der PIN-Kodes entspricht einer Menge von Zahlungskarten. Die Zahlungskarten ihrerseits können auf einem Träger mit einem durch eine Schutzschicht geschützten Satz, welche im Handelsnetz verbreitet werden, als auch von PIN-Kode-Sätzen auf E-Kommerz-Servern dargestellt werden. Dabei kann eine flexible Tarifbildung realisiert werden, dass bei der Verwendung der CA-Chip-Karten der verbreiteten Zugangsberechtigungssystem (CAS) nicht erreichbar ist. Es ist beispielsweise unmöglich, dass der Benutzer einen Sender aus dem Senderpaket, nachdem der PIN-Kode eingegeben wurde, mit der Anschauungszeit von einigen Minuten und der Gültigkeitsdauer des Abonnements von einigen Monaten/Jahren sehen kann.

Das vorgeschlagene System sieht Varianten bei der Realisierung vor, wenn der Server Validator (7) auf dem Gelände des Contentanbieters aufgestellt ist. Das erlaubt dem Anbieter, eine volle Kontrolle über die Benutzer zu haben, ohne Eingriffe der Operatoren in das Computernetzwerk zu befürchten. Von anderer Seite kann der Server Validator (7) und der Server für die Zugangsberechtigung (ACS) zusammengelegt werden, wenn zwischen dem CN-Operator und dem Content-Anbieter vertrauliche Beziehungen herrschen. In diesem Fall haben sie eine gemeinsame IP-Adresse, was das vorgeschlagene Zugangsberechtigungssystem (CAS) etwas vereinfachen kann.

## Patentansprüche

1. Verfahren zur Zungangsberechtigung (Conditional Access System - CAS) in Computernetzwerken,
**dadurch gekennzeichnet,**
**dass** mindestens ein Server für die Ströme der Inhalte des Anbieters (CSAS) verwendet wird, welcher einzigartige Adressen eines Basis-Internet-Protokolls (IP) den Contentströmen im Computernetzwerk (CN) zuweist, dass der Zungang zu den IP-Adressen durch eine Menge von Netzwerk-terminals (NT) ermöglicht wird, welche einen Content-Player, einen Descrambler und ein Modul für eine Anfrage des Zugangs zum Content aufweisen, dass eine Zwangsanfragemodul durch ein Computernetz mit einem Server für eine Zugantskontrolle des Benutzers (Access Control Server - ACS) und einen Servervalidator (7) verbunden wird, welcher dem Netzwerksterminal (NT) die Sessionsschlüssel (SK) verteilt, dass die Sessionsschlüssel (SK) die Kontrollwörter (CW) für die Contentdaten des anbieters schützt und für folgende Aktionen sorgt: dass in einem Adaptionsprozess ein geschützter (gescrambelter) Strom des Contents des Anbieters in das Netzwerkterminal (NT) übertragen wird, dass während der Übertragung der Strom der Contentbits ins Format re-verschlüsselt wird, wobei das Fromat für die Übertragung mittels der IP-Adressierung geeignet ist, dass dabei Pakete von gescrambelten, verschlüsselten Daten der contentströme des Anbieters nicht moduliert und die Kontrollwörter (CW) für eine Descrambling / Entschlüsselung der content-Daten mittels Sessionsschlüssel (SK) verschlüsselt, auf den Server für die Ströme der Inhalte des Anbieters (CSAS) vom Server Validator (7) übertragen und in den Strom der Nachrichten für die Steuerung der Rechte (ECM) engeschlossen werden, dass in einer Prozedur eine Vorbereitung des Zugangs zum Content durchgeführt wird, wobei durch die Wechselwirkung mit einem elektronischen Programmführer, welcher funktional mit dem Server für die Zugangskontrolle (ACS) verbunden ist, und dem Netzwerkterminal (NT eine Anfrage zur Initialisierung des Zugangs zum ausgewählten Strom an die IP-Adresse des Server Validators (7) ersetzt wird, dass die Anfrage einen Bezeichner (Kennung ID-NT) und eine vereinbarte Nummer des ausgewählten Contentstromes als Antwort auf die Anfrage erhält und der Server Validator (7) für das Netzwerkterminal (NT) des Benutzers eine Anfrage für die Bestätigung der Rechte für den Zugang zum Content als Antwort sendet, dass von dem Netwerkterminal (NT) eine Nachricht mit einem personalen Schlüsselsatz bei einer erfolgreichen NT.Autorisierung erteilt wird, dass der Server Validator (7) eine Nachricht für den Server für die Zugangskontrolle (ACS) abgibt, welche die Kennung (NT-ID) und eine vereinbarte Nummer des Contentstromes aufweist, welche den Zugang für dieses Netzwerkterminal (NT) zum ausgewählten Content des Benutzers erlaubt, dass durch den Server für die Zungangskontrolle (ACS) dann eine Nachricht an das Netzwerkterminal (NT) gesendet wird, welche die IP-Adresse des ausgewählten Contentstromes aufweist, dass gleichzeitig ein sicherer Kommunikationskanal zwischen dem Netwerkterminal (NT) und dem Server Validator (7) hergestellt wird, dass über diesen Kanal von dem Server Validator (7) die Nachricht mit dem Aktuellen Sessionsschlüssel (SK als Antworten auf die Anfragen ausgesendet werden, dass die Prozedur der Wiedergabe des Contentstromes darin besteht, dass die Netzwerkterminals (NT) die Daten (ECM) für die Zugangsberechtigung aus den Daten des ausgewählten Stroms des Anbieters de-multiplexiert werden, welche durch die IPAdresse von dem Server für die Ströme der Inhalte des Anbieters (CSAS) eingefangen wurden, dass das Kontrollwort (CW) mittels des Sessionsschlüssels (SK) descrambelt wird und mit Hilfe des Kontrollworts (CW) die Contentdaten mit einem Player wiedergegeben werden und dass dabei die Wiedergabe entweder durch einen Operator des Computernetzes (CN) durch eine Einschränkung des Zugangs für dieses Terminal zur IP-Adresse des Contents im Computernetz am Benutzeranschluss oder durch den Server-Validator (7) bei der Absage, den Sessions-schlüssel (SK) auf Anfrage des Terminals zu liefern, verhindert wird.

2. Verfahren nach Anspruch 1,
**dadurch gekennzeichnet,**
**dass** von dem Server für die Ströme der Inhalte des Anbieters (CSAS) die ECM- und die EMM-Nachrichten im Ausgangsstrom des Content-Anbieters gelöscht werden und dass dabei erlaubt wird, den neuen ECM-Strom eine 1-PAdresse zuzuweisen, die sich von der IPAdresse des restlichen Teils des Contents unterscheidet.

3. Verfahren nach Anspruch 1
**dadurch gekennzeichnet,**
**dass** in dem Server für die Ströme der Inhalte des Anbieters (CSAS) eine Verkapselung des Contentstromes ins Format eines Transportstromes (TS) für eine Übertragung in PDP-Paketen für Multicast und Unicast IP-Adressen vorgenommen wird.

4. Verfahren nach Anspruch 1,
**dadurch gekennzeichnet,**
**dass** die Verkapselung des Contentstroms des Anbieters in Formate MPEG1,
MPEG2, MPEG4, WM, RA, RV, AVI, OGG, MP3, PCM, WAV, AIFF, ADPCM
für eine Übertragung über http, RTP, RTSP, FTP Protokolle ermöglicht wird.

5. Verfahren nach Anspruch 1,
**dadurch gekennzeichnet,**
**dass** der Contentstrom an den Server für die Ströme des Anbieters (CSAS) in Form von DVB-Signalen (DVB-S, DVB-T, DVB-C, DVB-H) oder über ASI- oder SPI Schnittstellen übertragen wird.

6. Verfahren nach Anspruch 1,
**dadurch gekennzeichnet,**
**dass** der Contentstrom an den Server der Ströme der Inhalte des Anbieters (CSAS) in Form von analogen Video- und Audiosignale übertragen wird.

7. Verfahren nach Anspruch 1,
**dadurch gekennzeichnet,**
**dass** der Contentstrom an den Server der Ströme der Inhalte des Anbieters (CSAS) über Computernetz in UDP-Paketen für Multicast und Unicast IP-Adressen übertragen wird.

8. Verfahren nach Anspruch 1,
**dadurch gekennzeichnet,**
**dass** der Content an den Server für die Inhalte der Ströme des Anbieters (CSAS) in Form der Dateien in Formaten MPEG1, MPEG2, MPEG4, WM, RA, RV, AVI, OGG, MP3, PCM, WAV, AIFF, ADPCM übertragen wird.

9. Verfahren nach Anspruch 8,
**dadurch gekennzeichnet,**
**dass** die Daten der Contentdateien, die an den Server für die Ströme der Inhalte des Anbieters (CSAS) übertragen werden, vorläufig mittels eines Kontrollwortes (CW) scrambliert / verschlüsselt wird.

10. Verfahren nach Anspruch 9,
**dadurch gekennzeichnet,**
**dass** Kontrollwort (CW) in ECM-Nachrichten an den Server für die Ströme der Inhalte des Anbieters (CSAS) übertragen werden.

11. Verfahren nach Anspruch 9,
**dadurch gekennzeichnet,**
**dass** das Kontrollwort (CW) an den Server für die Ströme der Inhalte des Anbieters (CSAS) als separate Datei übertragen wird.

12. Verfahren nach Anspruch 10 oder 11,
**dadurch gekennzeichnet,**
**dass** die Contentdateien an den Server für die Ströme der Inhalte des Anbieters (CSAS) über ein Computernetzwerk mit Hilfe von HTTP, RTP, RTSP, FTP Protokollen übertragen werden.

13. Verfahren nach Anspruch 10 oder 11,
**dadurch gekennzeichnet,**
**dass** die Contentdateien an den Server für die Ströme der Inhalte des Anbieters (CSAS) auf einem Datenträger DVD, CD, einer Flash-Karte, einer Festplatte übertragen werden.

14. Verfahren nach Anspruch 1,
**dadurch gekennzeichnet,**
**dass** die Daten des übertragenden Contentstroms mit Hilfe von Common-Scrambling-Algorithmus (CSA) geschützt werden.

15. Verfahren nach Anspruch 1,
**dadurch gekennzeichnet,**
**dass** die Daten des übertragenden Contentstroms mit Hilfe von Verschlüsselungsalgorithmen RC4, AES-128, GOST 28147-89, DES, HC-128 geschützt werden.

16. Verfahren nach Anspruch 15,
**dadurch gekennzeichnet,**
**dass** die Daten des Contentstroms des Anbieters an dem Server für die Ströme der Inhalte des Anbieters (CSAS) gescrambelt / verschlüsselt werden.

17. Verfahren nach Anspruch 1,
**dadurch gekennzeichnet,**
**dass** für die Bestätigung der NT-Rechte von dem Server Validator (7) eine HTML-Seite erstellt wird, wo eine Auswahl der Varianten für die Bestätigung der Zugangsbedingungen oder eine Standart-Variante des Abonnements angeboten wird, wenn von dem Benutzer die Option früher ausgewählt wurde.

18. Verfahren nach Anspruch 1,
**dadurch gekennzeichnet,**
**dass** für die Bestätigung der NT-Rechte von dem Server Validator (7) eine HTML-Seite erstellt wird, wo angeboten wird, einen PIN-Kode einzugeben.

19. Verfahren nach Anspruch 1,
**dadurch gekennzeichnet,**
**dass** bei der Auswahl der Variante des Contents bei einer interaktiven Wechselwirkung mit einem elektronischen Programmführer (EPG) vorgeschlagen wird, einen PIN-Kode oder Schlüsselsatz einzugeben, welche im Rahmen einer Anfrage auf den Server Validator (7) gelangen.

20. Verfahren nach Anspruch 1,
**dadurch gekennzeichnet,**
**dass** ein Server Validator Media-Access-Control-Adresse (MAC), eine vorgeschriebene IP-Adresse für ein Terminal, eine Serien-Nummer des Terminals, einen Schlüsselsatz, einen PIN-Kode oder deren Kombination als ID für die Prüfung der Rechte für den Zugang zum Content verwendet werden.

21. Verfahren nach Anspruch, **dadurch gekennzeichnet, dass** von einem Server Validator (7) eine Nachricht über eine Zugangsberechtigung zum NT-Content des Benutzers für den Server für die Steuerung des Zugangs erstellt wird, wo die Media-Access-Control-Adresse (MAC), eine vorgeschriebene IP-Adresse für ein Terminal, eine Serien-Nummer des Terminals, einen Schlüsselsatz, ein PIN-Kode oder deren Kombination als ID eingeschlossen wird.

22. Verfahren nach Anspruch 1,
**dadurch gekennzeichnet,**
**dass** nach der Anfrage des Zugangs zum NT-Content an den Server Validator (7) und bei der Verweigerung der Zugangsrechte für den Content eine Nachricht für den Server für die Zugangskontrolle (ACS) über das Zugangsverbot zum Content für das Terminal mit dem genannten ID erstellt wird; und dass der Server für die Zungangskontrolle (ACS) konfiguriert ein Zugangsverbot für die IP-Adresse des Contents am Benutzeranschluß für diese Netzwerkterminals NT konfiguriert.

23. Verfahren nach Anspruch 1,
**dadurch gekennzeichnet,**
**dass** ein Server Validator (7) mit dem Netzwerkterminal (NT) kommuniziert und dabei Passwortübertragungsprotokolle (PIN-Kode) verwendet werden, die nach den unidirektionalen Hash-Algorithmen MD5, SHA- 1, SHA-2, RIPEMD-160, GOST R 34.11-94 funktionieren.

24. Verfahren nach Anspruch 1,
**dadurch gekennzeichnet,**
**dass** der Server Validator (7) mit einem Terminal kommuniziert, wobei eine sichere Verbindung mittels SSL/TLS, IPSec, PPTP-Protokolle hergestellt wird.

25. Verfahren nach Anspruch 1,
**dadurch gekennzeichnet,**
**dass** der Server für die Zugangskontrolle (ACS) mit dem Benutzer-Netzwerkterminal (NT) über einen Programm Führer (EPG) mittels http/https-Protokolle kommuniziert.

26. Verfahren nach Anspruch 1,
**dadurch gekennzeichnet,**
**dass** die Sessionsschlüssel (SK), die im Server-Validator (7) erstellt werden, kommen an den Server für die Ströme für den Anbieter (CSAS) gelangen, wo die Kontrollwörter (CW) mittels Verschlüsselungsalgorhytmen AES- 128, GOST 28147-89, DES, HC-128 verschlüsselt werden, bevor sie als ECM-Nachrichten gesetzt werden.

27. Verfahren nach Anspruch 1,
**dadurch gekennzeichnet,**
**dass** die Sessionsschlüssel (SK) für den Server für die Ströme der Inhalte des Anbieters (CSAS) und die Benutzerterminals als Schlüsselsätze dargestellt werden, die gleichzeitig aktiv sind, aber unterschiedliche Gültigkeitsdauer haben (Schlüsselsatz mit der Gültigkeitsdauer von 1, 3, 5 Minuten, 1, 3, 5, 12 Stunden, Tag, Woche, Monat, 10-Tage, Vierteljahr, Jahr).

28. Verfahren nach Anspruch 1,
**dadurch gekennzeichnet,**
**dass** die Sessionsschlüssel (SK) generiert oder aus dem vorläufigen Datensatz im Server Validator (7) entnommen werden.

29. Verfahren nach Anspruch 1,
**dadurch gekennzeichnet,**
**dass** die Sessionsschlüssel (SK) an Server Validator (7) vom Content-Anbieter übergeben werden.

30. Verfahren nach Anspruch 1,
**dadurch gekennzeichnet,**
**dass** ein IGMP-Protokoll für den Zugang zum Content-Strom des Anbieters bei einer Multicast-IP-Adressierung verwendet wird.

31. Verfahren nach Anspruch 1,
**dadurch gekennzeichnet,**
**dass** Protokolle RADIUS, SNMP, ARP oder deren Kombination für den Zugang des Benutzers zum Netzwerkanschluß verwendet werden.

32. Verfahren nach Anspruch 1,
**dadurch gekennzeichnet,**
**dass** die Kontrollwörter (CW) des Anbieters aus dem Strom der ECM-Nachrichten durch ein offizielles Zugangsberechtigungsmodul (Conditional Access Modul-CAM) des Contentanbieters entschlüsselt werden.

33. Verfahren nach Anspruch 1,
**dadurch gekennzeichnet,**
**dass** die Kontrollwörter (CW) des Anbieters über einen sicheren Kanal vom Server des Contentanbieters übergeben werden.

34. Verfahren nach Ansprüchen 32 oder 33,
**dadurch gekennzeichnet,**
**dass** die Kotrollwörter (CW) aus dem Strom der ECM-Nachrichten des Contents des Anbieters in dem Server für die Ströme der Inhalte des Anbieters (CSAS) entschlüsselt werden.

35. Verfahren nach Ansprüchen 32 oder 33,
**dadurch gekennzeichnet,**
**dass** die Kontrollwörter (CW) aus dem Strom der ECM-Nachrichten des Contents des Anbieters im Server Validator (7) entschlüsselt werden.

36. Verfahren nach Ansprüchen 32 oder 33,
**dadurch gekennzeichnet,**
**dass** ein offenes Kontrollwort (CW) an das Netzwerkterminal (NT) über einen sicheren Kommunikationskanal übergeben wird.

37. Verfahren nach Anspruch 1,
**dadurch gekennzeichnet,**
**dass** einzelne Datenpakete des Contentstroms des Anbieters in dem Server für die Ströme der Inhalte des Anbieters (CSAS) spezielle unauffällige Verzerrungen (Wasserzeichen) eingefügt werden.

38. Verfahren nach Anspruch 1,
**dadurch gekennzeichnet,**
**dass** von dem Server für die Zugangskontrolle (ACS) die Nachrichten über Anfang/Ende der Abrechnung für den Zugang des Netzterminals zum Contentstrom des Anbieters für ein Billingsystem des Netzwerkanbieters erstellt werden.

39. Verfahren nach Anspruch 1,
**dadurch gekennzeichnet,**
**dass** Server die Nachrichten über Anfang/Ende der Abrechnung für den Zugang des Netzterminals zum Contentstrom des Anbieters für ein Billingsystem des Netzwerkanbieters erstellt werden.

40. Verfahren nach Anspruch 1,
**dadurch gekennzeichnet,**
**dass** die Nachrichten für ein Billingsystem des Operators des Computernetzwerks gleichzeitig vom Server Validator (7) und von dem Server für die Zugangskontrolle (ACS) übertragen werden.

41. Verfahren nach Anspruch 1,
**dadurch gekennzeichnet,**
**dass** von dem Server Validator (7) die NT-Anfragen für Sessionsschlüssel (SK) gemäß einer integrierten Datenbank beantwortet werden, wobei die Datenbank mindestens eines dieser Felder aufweist: einen PIN-Kode, eine Netzwerk-Hardware-Adresse des Terminals, einen Zähler für die restliche Zeit des Limits, eine Gültigkeitsdauer für den PIN-Kode dieses Datensatzes.

42. Verfahren nach Anspruch 1,
**dadurch gekennzeichnet,**
**dass** nach der Autorisierung des Benutzers von dem Server Validator (7) erlaubt wird, nach den NT-Anfragen die Sessionsschlüssel (SK) für die Gruppe der Contentströme des Anbieters zu liefern, ohne dass eine wiederholte Prozedur der Vorbereitung des Zugangs für den Contentstrom des Anbieters eingeleitet wird.

43. Verfahren nach Anspruch 1,
**dadurch gekennzeichnet,**
**dass** von dem Billingmodul des Operators des Computernetzes Berichte für Contentanbieter über den Server Validator (7) geliefert werden.

44. System zur Durchführung des Verfahrens zur Zugangsberechtigung in Computernetzwerken,
**dadurch gekennzeichnet,**
**dass** es mindestens einen Server für die Ströme der Inhalte des Anbieters (CSAS) aufweist, welcher einzigartige Adressen eines Basis-Internet-Protokolls (IP) den Content-Strömen im Computernetzwerk (CN) zuweist, dass der Zugang zu den IPAdressen durch eine Menge von Netzwerk-terminals (NT) ermöglicht ist, welche einen Content-Player, einen Descrambler und ein modul für eine Anfrage des Zugangs zum Content haben, dass ein Zugangsanfragemodul über ein Computernetz mit einem Server für die Zugangskontrolle des Benutzers (Access Control Server- ACS) und einen Server Validator (7) verbunden ist, welcher dem Netzwerkterminal (NT) die Sessionsschlüssel (SK) verteilt, die die Übertragung in das Computernetz (CN) darstellt, wobei der Übertragung der Strom der Contentbits in das Rofmat re-verkapselbar ist, das für eine Übertragung mittels einer IP-Adressierung geeignet ist, dass die Pakete der geschützten / scrambierten Daten der Contentströme des Anbieters nicht modifizeirt sind, dass die Kontrollwörter (CW) für die Descrambling / Entschlüsselung der Dontentdaten mittels der Sessions-Schlüssel (SK) verschlüsselt auf den Server für die Ströme der Inhalte des Anbieters (CSAS) vom Server Validator (7) übertragen sind, dass die Prozedur der Vorbereitung des Zugangs zum content aus der Wechselwirkung mit einem elektronischen Programmführer (EPG) besteht, welcher funktional mit dem Server für die Zugangskontrolle (ACS) verbunden ist, dass das Netzwerkterminal (NT) eine Anfrage zur Initialisierung des Zugangs zum ausgewählten Strom an der IP-Adresse des Server Validators (7) auslöst, dass die Anfrage einen Bezeichner (Kennung-ID NT) und eine vereinbarte Nummer des ausgewählten Content-Stroms aufweist und der Server Validator (7) für den Netzwerkterminator (NT) des Benutzers eine Anfrage für eine Bestätigung der Rechte für den Zugang zum Content erstellt, dass das Netzwerkterminal (NT) als Antwort eine Nachricht mit einem personalen Schlüsselsatz bei einer erfolgreichen NT-Autorisierung sendet, dass der Server Validator (7) eine Nachricht für den Server für die Zugangskontrolle (ACS) erstellt, welche die Kennung (NT-ID) und eine vereinbarte Nummer des Contentstroms enthält, welche den Zugang für dieses Netzwerkterminal (NT) zum ausgewählten Content des Benutzers erlaubt, dass der Server für die Zugangskontrolle (ACS) eine Nachricht an das Netzwerkterminal (NT) sendet, welche die IP-Adresse des ausgewählten (Contentstroms) aufweist, dass gleichzeitig ein sicherer Kommunikationskanal wzsichen dem Netzwerkterminal (NT) und dem Server-Validator (7) geblidet ist, dass über diesen Kanal der Server Validator (7) Nachrichten mit aktuellem Sessionsschlüsseln (SK) als Antwort auf die Anfragen sendet, dass eine Prozedur der Wiedergabe des Contentstroms darin besteht, dass das Netzwerkterminal (NT) die EMC-Nachrichten aus den Daten des ausgewählten Stroms des Anbieters de-multiplexiert, welche durch die IP-Adresse vom Server für die Ströme für die Inhalte des Anbieters (CSAS) empfangen hat, die Kontrollwörter (CW) mittels der Sessionsschlüssel (SK) entschlüsselt, mit Hilfe des Kontrollwortes (CW) die Contentdaten descambliert und über einen Player wiedergibt und dass dabei die Wiedergabe durch einen Operator des Computernetzes durch die Einschränkung des Zugangs für dieses Terminal zur IP-Adresse des Contents im Computernetz (CN) am Benutzeranschluss oder durch den Server Validator (7) bei der Absage den Sessionsschlüssel (SK) zu liefern gesperrt ist.

45. System nach Anspruch 44,
**dadurch gekennzeichnet,**
**dass** ein Beistellgerät Set-Top-Box (STB) als Terminal verwendet ist.

46. System nach Anspruch 44,
**dadurch gekennzeichnet,**
**dass** ein Personal Computer mit einer entsprechend installierten Software als Terminal verwendet ist.

47. System nach Anspruch 44,
**dadurch gekennzeichnet,**
**dass** ein Modul eines elektronischen Programmführers (EPG) in dem Server für die Zugangskontrolle (ACS) integriert ist.

48. System nach Anspruch 44,
**dadurch gekennzeichnet,**
**dass** das Modul des elektronischen Programmführers (EPG) in Form eines oder mehreren Servers ausgeführt ist.

49. System nach Anspruch 44,
**dadurch gekennzeichnet,**
**dass** der Server für die Ströme für die Inhalte des Anbieters (CSAS) ein oder mehrere offizielle Zugangsberechtigungsmodule (Conditional Access Module - CAM) eines Contentanbieters enthält.

50. System nach Anspruch 44,
**dadurch gekennzeichnet,**
**dass** der Server Validator (7) ein oder mehrere offizielle Zugangsberechtigungsmodule (Conditional Access Module - CAM) eines Contentanbieters enthält.

51. System nach Anspruch 44,
**dadurch gekennzeichnet,**
**dass** mehrere Server Validatoren (7), die unterschiedlichen Contentanbieter angehören, funktionieren.

52. System nach Anspruch 44,
**dadurch gekennzeichnet,**
**dass** es ein Billingmodul enthält.

53. System nach Anspruch 44,
**dadurch gekennzeichnet,**
**dass** das Billingmodul mit dem Server Validator (7) vereinigt ist.

54. System nach Anspruch 44, **dadurch gekennzeichnet, dass** das Billingmodul mit dem Server für die Zugangsberechtigung (ACS) vereinigt ist.

55. System nach Anspruch 44,
**dadurch gekennzeichnet,**
**dass** der Server Validator (7) eine Datenbank aufweist, die mindestens ein folgendes Feld enthält: einen PIN-Kode, eine Netzwerk-Hardware-Adresse (MAC) des Benutzers, eine IP-Adresse des Benutzer-NT, einen Zähler für die restliche Zeit des Limits, und eine Gültigkeitsdauer für den PIN-Kode dieses Datensatzes.

56. System nach Anspruch 55,
**dadurch gekennzeichnet,**
**dass** der Server Validator (7) in der Datenbank einen Datensatz - PIN-Kode - als ein Pflichtfeld enthält, wobei eine Menge der PIN-Kodes einer Menge von Zahlungskarten entspricht.

57. System nach Anspruch 56,
**dadurch gekennzeichnet,**
**dass** Prepaid-Karten auf einem Träger mit dem PIN-Kode und einer Schutzschicht dargestellt sind.

58. System nach Anspruch 56,
**dadurch gekennzeichnet,**
**dass** die Prepaid-Karten in Form der PIN-Kodes auf einem Server für E-Kommerz dargestellt sind.

59. System nach Anspruch 44,
**dadurch gekennzeichnet,**
**dass** sich der Server Validator (7) auf dem Gelände des Anbieters des Contents befindet.

60. System nach Anspruch 44,
**dadurch gekennzeichnet,**
**dass** der Server Validator (7) und der Server für die Zugangsberechtigung
(ACS) eine gemeinsame IP-Adresse haben.
